# EUROPÄISCHE PATENTSCHRIFT

(11) **EP 4 328 632 B1**
(45) Veröffentlichungstag und Bekanntmachung des Hinweises auf die Patenterteilung: **02.12.2026**
(21) Anmeldenummer: 22191485.6
(22) Anmeldetag: 22.08.2022
(51) Int. Cl.: G02B 1/115, G02B 1/14

(54) **OPTISCHES ELEMENT MIT ANTIREFLEXIONSBESCHICHTUNG**
OPTICAL ELEMENT WITH ANTIREFLECTION COATING
ÉLÉMENT OPTIQUE POURVU DE REVÊTEMENT ANTI-REFLET

(43) Veröffentlichungstag der Anmeldung: 28.02.2024
(73) Patentinhaber: Bühler Alzenau GmbH, 63755 Alzenau (DE)
(72) Erfinder: GÖTZELMANN, Rainer, 63755 Alzenau (DE); HAGEDORN, Harro, 63755 Alzenau (DE)
(74) Vertreter: Prinz & Partner mbB

(56) Entgegenhaltungen:
- WO-A1-2022/125846
- JP-A- 2002 125 917
- US-A1- 2018 081 085

## Beschreibung

Die Erfindung betrifft ein medizinisches Gerät umfassend ein optisches Element mit einem Substrat und einer auf einer Auftragsfläche des Substrats aufgebrachten Antireflexionsbeschichtung sowie die Verwendung eines optischen Elements.

Antireflexionsbeschichtungen dienen dazu, die Transmission von Licht, das auf ein optisch transparentes Substrat fällt, zu erhöhen und/oder das Ausmaß von störenden optischen Einflüssen wenigstens zu verringern. Dabei stellt sich das Problem, dass die Antireflexionsbeschichtung als äußerste Komponente des jeweiligen optischen Elements, umfassend das Substrat und die Antireflexionsbeschichtung, Umwelteinflüssen ausgesetzt ist, welche die Funktionsfähigkeit der Antireflexionsbeschichtungen beeinträchtigen können. Dieser Effekt wird in Antireflexionsbeschichtungen noch dadurch verstärkt, dass die äußerste Teilschicht der Antireflexionsbeschichtung, also diejenige Schicht, auf die einfallende elektromagnetische Strahlung trifft, aus einem Material bestehen sollte, das einen möglichst niedrigen Brechungsindex aufweist, um einen möglichst hohen Transmissionsgrad erzielen zu können. Derartige Materialien sind jedoch besonders empfindlich für Beschädigungen.

Es ist bekannt, Antireflexionsbeschichtungen gegenüber mechanischen Belastungen und dadurch hervorgerufene Beschädigungen wie beispielsweise Kratzern zu schützen. Dazu werden Materialien mit hohem Brechungsindex als äußerste Teilschicht der Antireflexionsbeschichtung aufgebracht, da derartige Materialien üblicherweise eine erhöhte Widerstandsfähigkeit gegenüber mechanischen Belastungen aufweisen.

Beispielsweise beschreibt die DE 10 2018 116 993 B4 eine optische Komponente mit einem Schichtstapel, der aufeinanderfolgende Lagen mindestens dreier Typen aufweist, die jeweils unterschiedliche Brechungsindizes aufweisen. Die oberste Lage verfügt über einen niedrigeren Brechungsindex als die zweitoberste Lage, jedoch über einen höheren Brechungsindex als eine weitere Lage, die unterhalb der obersten und zweitobersten Lage angeordnet ist.

Die US 2018/0081085 A1 beschreibt elektronische Geräte wie Mobiltelefone, Computer und Uhren, die ein transparentes Element umfassen, das beispielsweise ein Display oder ein Kamerafenster ist. Das transparente Element ist mit einer Antireflexionsbeschichtung versehen, die eine alternierende Abfolge aus dielektrischen Schichten mit hohem und niedrigem Brechungsindex aufweist. Um die Kratzbeständigkeit der Antireflexionsbeschichtung zu erhöhen, kann eine äußerste Interferenzfilterschicht auf die Antireflexionsbeschichtung aufgebracht sein, die aus einem hochbrechenden Material besteht.

Die WO 2022/125846 A1 offenbart ein Abdeckglas für elektronische Geräte, wie Mobilgeräte, Tablets und Fahrzeugdisplays, mit einer äußeren optischen Filmstruktur und einer inneren optischen Filmstruktur, die jeweils eine Mehrzahl alternierender Teilschichten mit hohem und tiefem Brechungsindex umfassen. Die Teilschichten mit hohem Brechungsindex der äußeren optischen Filmstruktur umfassen ein Nitrid oder Oxynitrid und die Teilschichten mit hohem Brechungsindex der inneren optischen Filmstruktur umfassen ein Oxid oder Nitrid. Auf der äußeren optischen Filmstruktur kann ferner eine kratzfeste Schicht aus einem hochbrechenden Material aufgebracht sein.

Aus der JP 2002 125917 A1 ist ein Endoskop mit einem Einführende, das eine Außenhülle aufweist, bekannt. In der Außenhülle sind verschiedene Komponenten des Endoskops aufgenommen, unter anderem ein Lichtleiter und ein Bildleiter, der zu einem Okular führt und am distalen Ende mit einer Linse verbunden ist. Die Innenseite der Außenhülle sowie die Außenseiten der in der Außenhülle aufgenommene Komponenten sind mit einer Beschichtung aus DLC ("diamond-like-carbon") versehen.

Je nach Anwendungsfall ist es jedoch nicht ausreichend die Widerstandsfähigkeit gegenüber mechanischen Belastungen sicherzustellen. Vielmehr kann es notwendig sein, zusätzlich eine Widerstandsfähigkeit gegenüber Chemikalien bereitstellen zu können. Insbesondere im Fall optischer Elemente für den Einsatz in medizinischen Geräten ist eine regelmäßige Reinigung mit chemisch aggressiven Behandlungslösungen, beispielsweise stark alkalischen Lösungen, notwendig. Dieser Effekt wird noch dadurch verstärkt, dass übliche Reinigungsprozesse in Autoklaven durchgeführt werden müssen, wodurch zusätzlich eine hohe Druck- und Temperaturbelastung erzeugt wird.

Aufgabe der Erfindung ist es daher, ein medizinisches Gerät mit einem optischen Element anzugeben, dessen Antireflexionsbeschichtung beständig gegenüber Chemikalien wie alkalischen Lösungen ist und zugleich einen hohen Transmissionsgrad bzw. einen geringen Reflexionsgrad aufweist.

Die Aufgabe wird gelöst durch ein medizinisches Gerät gemäß Anspruch 1 und die Verwendung eines optischen Elements gemäß Anspruch 12.

Das erfindungsgemäße medizinische Gerät umfasst ein optisches Element mit einem Substrat und einer auf eine Auftragsfläche des Substrats aufgebrachten Antireflexionsbeschichtung, wobei die Antireflexionsbeschichtung eine alternierende Schichtabfolge aus Teilschichten mit unterschiedlichen Brechungsindizes umfasst. Die Antireflexionsbeschichtung umfasst zusätzlich zur alternierenden Schichtabfolge eine Korrosionsschutzschicht zum Schützen der Antireflexionsbeschichtung vor alkalischen Lösungen, die diejenige Schicht der Antireflexionsbeschichtung ist, die am weitesten von der Auftragsfläche des Substrats entfernt ist. Die Korrosionsschutzschicht ist so ausgelegt, dass das Verhältnis aus dem Brechungsindex der Korrosionsschutzschicht und der Schichtdicke der Korrosionsschutzschicht in Nanometern im Bereich von 0,3 bis 0,9 liegt. Die Korrosionsschutzschicht besteht aus einem hochbrechenden Material, das Zirconiumoxid ist.

Die Erfindung beruht auf dem Grundgedanken, auf der für den gewünschten optischen Transmissionsgrad notwendigen alternierenden Schichtabfolge zusätzlich eine Korrosionsschutzschicht vorzusehen, wobei der Brechungsindex und die Schichtdicke der Korrosionsschutzschicht gezielt aufeinander abgestimmt sind. Auf diese Weise ist es möglich, in der Korrosionsschutzschicht auch hochbrechende Materialien einzusetzen, die eine hohe Chemikalienbeständigkeit aufweisen, ohne die Transmission durch die Antireflexionsbeschichtung hindurch übermäßig zu beeinträchtigen. Gleichzeitig weist die Korrosionsschutzschicht jedoch eine gewisse Dicke auf, sodass diese auch nach mehrfachen Reinigungsprozessen nicht vollständig abgebaut ist und somit die Lebensdauer der Antireflexionsbeschichtung und des optischen Elements erhöht ist.

In diesem Sinne fungiert die Korrosionsschutzschicht als "Capping"-Schicht der Antireflexionsbeschichtung.

Bei der Berechnung des Verhältnisses aus dem Brechungsindex und der Schichtdicke der Korrosionsschutzschicht wird erfindungsgemäß die Schichtdicke in Nanometern verwendet. Es versteht sich, dass für die Berechnung des Verhältnisses der entsprechende Wert der Schichtdicke jedoch dimensionslos verwendet wird, sodass auch das Verhältnis im Bereich von 0,3 bis 0,9 dimensionslos ist. Beispielsweise weist eine Korrosionsschutzschicht mit einem Brechungsindex nₖ von 2,0 und einer Schichtdicke dₖ von 3,2 nm ein Verhältnis α = nₖ/dₖ = 2,0/3,2 von 0,625 auf.

Der Brechungsindex ist der Brechungsindex, wie er bei einer Messtemperatur von 20 °C und einer Wellenlänge von 550 nm gemessen wird.

Die Korrosionsschutzschicht besteht aus einem hochbrechenden Material, das Zirconiumoxid ist.

Entscheidend für die Eignung als hochbrechendes Material der Korrosionsschutzschicht ist insbesondere die Widerstandsfähigkeit gegenüber Chemikalien, insbesondere alkalischen Lösungen. Es wurde erkannt, dass Zirconiumoxid in dieser Hinsicht geeignet ist und somit eine besonders widerstandsfähige Korrosionsschutzschicht ermöglicht. Durch die erfindungsgemäße Abstimmung zwischen Brechungsindex und Schichtdicke der Korrosionsschutzschicht können zudem weiterhin gute optische Eigenschaften der Antireflexionsbeschichtung erzielt werden.

Es wurde zudem gefunden, dass einige Materialien, die üblicherweise zum Schutz vor mechanischen Beschädigungen von Antireflexionsbeschichtungen eingesetzt werden, keine ausreichende Widerstandsfähigkeit gegenüber Chemikalien aufweisen. In diesem Sinne eignen sich insbesondere Aluminiumoxid (Al₂O₃), Siliziumnitrid (Si₃N₄), Nioboxid (Nb₂O₅) und Titanoxid (TiO₂) nicht als Material für die Korrosionsschutzschicht des erfindungsgemäßen optischen Elements.

Die Korrosionsschutzschicht kann einen Brechungsindex im Bereich von 1,8 bis 2,5 aufweisen, bevorzugt im Bereich von 1,9 bis 2,2. Liegt der Brechungsindex der Korrosionsschutzschicht oberhalb von 2,5, kann der Transmissionsgrad der Antireflexionsbeschichtung zu stark abgesenkt sein bzw. müsste die Korrosionsschutzschicht derart dünn ausgelegt werden, dass keine ausreichende chemische Widerstandsfähigkeit oder Korrosionsbeständigkeit gewährleistet werden kann.

Ferner kann die Korrosionsschutzschicht eine Schichtdicke im Bereich von 3,0 bis 6,0 nm haben, bevorzugt im Bereich von 3,0 bis 5,0. Bei einer Schichtdicke von unter 3,0 nm ist die Widerstandsfähigkeit und Lebensdauer der Korrosionsschutzschicht übermäßig eingeschränkt bzw. verkürzt. Bei einer Schichtdicke von mehr als 6,0 nm kann der Transmissionsgrad der Antireflexionsbeschichtung zu stark abgesenkt sein.

Um die Beständigkeit der Korrosionsschutzschicht weiter zu erhöhen, kann die Korrosionsschutzschicht mittels Sputtern aufgetragen sein, insbesondere mittels DC-Sputtern, HF-Sputtern, Magnetronsputtern oder Ionenstrahlsputtern. Es wurde gefunden, dass Sputterverfahren eine besonders resistente bzw. widerstandsfähige Korrosionsschutzschicht erzeugen, insbesondere im Vergleich zu Auftragungsverfahren, bei denen das jeweilige Material lediglich aufgedampft wird, beispielsweise ionenunterstütztes Aufdampfen oder plasmaunterstütztes Aufdampfen.

Dieser Effekt wird darauf zurückgeführt, dass die beim Sputtern erzeugten Partikel bzw. Ionen eine höhere kinetische Energie zum Zeitpunkt des Auftreffens auf das zu beschichtende Objekt aufweisen, vorliegend die alternierende Schichtabfolge, als es bei anderen Auftragungsverfahren der Fall ist. Auf diese Weise wird eine höhere Packungsdichte in der aufgebrachten Korrosionsschutzschicht erzeugt, die wiederum die Widerstandsfähigkeit erhöht, insbesondere die Widerstandsfähigkeit gegenüber Chemikalien.

Insbesondere weist die Korrosionsschutzschicht eine Packungsdichte von 90% oder mehr der theoretisch maximal erreichbaren Packungsdichte auf.

Durch Auftragen der Korrosionsschutzschicht mittels Sputtern kann zudem die Oberflächenrauheit der Korrosionsschutzschicht reduziert werden. Entsprechend weist die Korrosionsschutzschicht insbesondere eine Oberflächenrauheit Rₐ von 0,50 nm oder weniger auf. Auf diese Weise kann die Lebensdauer der Korrosionsschutzschicht noch weiter erhöht werden. Die Oberflächenrauheit Rₐ kann gemäß DIN EN ISO 4287:2010 gemessen werden.

In einer Variante weist das optische Element nach sechs Ablaugzyklen eine Zunahme des Reflexionsgrads von 1 % oder weniger auf, wobei ein Ablaugzyklus die Behandlung des optischen Elements in einem Ultraschallbad mit einer Leistung von 300 W bei einer Temperatur von 60 °C für eine Stunde umfasst und wobei das Ultraschallbad eine wässrige Kaliumhydroxidlösung mit einer Konzentration von 10 Gewichtsprozent Kaliumhydroxid, bezogen auf das Gesamtgewicht der Kaliumhydroxidlösung, aufweist.

Der Ablaugzyklus, in welchem das optische Element innerhalb des alkalischen Ultraschallbads eingetaucht und behandelt wird, stellt eine einfache und schnelle Testmethode zur Verfügung, mit der die Beständigkeit der Antireflexionsbeschichtung, insbesondere der Widerstandsfähigkeit der Korrosionsschutzschicht, überprüft werden kann. Insbesondere ist der auf diese Weise verursachte Stress auf die Antireflexionsbeschichtung vergleichbar mit den Bedingungen, denen das optische Element bei bekannten Reinigungsverfahren für die Anwendung im medizinischen bzw. klinischen Bereich ausgesetzt ist. So entspricht die Belastung innerhalb eines Ablaugzyklus wie zuvor beschrieben in etwa der Beanspruchung, welcher das optische Element in mehreren Reinigungszyklen in einem Autoklav im medizinischen bzw. klinischen Bereich unterworfen wäre.

Die Zunahme des Reflexionsgrads wird bestimmt als Mittelwert der Zunahme des Reflexionsgrads über einen Wellenlängenbereich von 400 nm bis 750 nm. Der Reflexionsgrad kann mittels eines Spektralphotometers gemessen werden.

Die alternierende Schichtabfolge kann eine oder mehrere Lagen umfassen, wobei jede Lage über eine erste Teilschicht und eine zweite Teilschicht verfügt und der Brechungsindex der ersten Teilschicht niedriger ist als der Brechungsindex der zweiten Teilschicht. Durch die Abfolge von Lagen, die sich aus dieser Kombination von Teilschichten mit unterschiedlichen Brechungsindizes ergibt, lässt sich das Interferenzverhalten der Antireflexionsbeschichtung präzise steuern.

Es versteht sich, dass die Teilschichten von direkt aneinander angrenzenden Lagen derart ausgewählt und angeordnet sind, dass die alternierende Schichtabfolge gegeben ist. Das heißt, dass beispielsweise im Fall, dass eine Lage als oberste Teilschicht eine erste Teilschicht aufweist, die vom Substrat gesehen nächstentferntere Lage eine zweite Teilschicht als unterste Teilschicht aufweist.

In einer Variante ist die Korrosionsschutzschicht direkt auf eine erste Teilschicht der alternierenden Schichtabfolge aufgebracht. Anders ausgedrückt folgt auf eine erste Teilschicht, die einen niedrigeren Brechungsindex aufweist als die zweite Teilschicht, die erfindungsgemäß vorgesehene Korrosionsschutzschicht. Insbesondere weist die Korrosionsschutzschicht einen höheren Brechungsindex auf als die erste Teilschicht, sodass in dieser Variante sichergestellt ist, dass eine Abfolge aus Schichten mit einem niedrigeren Brechungsindex und Schichten mit einem höheren Brechungsindex realisiert ist. Auf diese Weise kann das gewünschte Antireflexionsverhalten der Antireflexionsbeschichtung sichergestellt und somit ein hoher Transmissionsgrad bzw. ein geringer Reflexionsgrad erreicht werden.

Bevorzugt weist das optische Element einen Reflexionsgrad von 0,5 % oder weniger auf, wobei der Reflexionsgrad der Mittelwert des Reflexionsgrads über einen Wellenlängenbereich von 400 nm bis 750 nm ist.

Um einen besonders hohen Transmissionsgrad bzw. einen besonders niedrigen Reflexionsgrad zu erreichen, kann die alternierende Schichtabfolge mindestens vier Lagen umfassen.

Bevorzugt ist das medizinische Gerät ein Endoskop.

Der Begriff "optisches Element" umfasst sowohl Elemente, die lediglich zumindest teilweise optisch transparent sind, wie beispielsweise Fenster, als auch Elemente, die eine optische Wirkung aufweisen, wie beispielsweise eine Linse oder ein Prisma.

In Anwendungen für medizinische Geräte ist die Widerstandsfähigkeit gegenüber Chemikalien von besonderer Bedeutung, da derartige Geräte sehr häufig, in der Regel nach jeder Anwendung, gereinigt und/oder desinfiziert werden müssen, wobei insbesondere aggressive Chemikalien wie alkalische Lösungen zum Einsatz kommen. Daher ist die chemische Beständigkeit bzw. chemische Widerstandsfähigkeit von Bestandteilen optischer Elemente, die diesen Chemikalien ausgesetzt sind, von besonderer Bedeutung für die Eignung als medizinisches Gerät.

Besonders bevorzugt ist das optische Element eine Linse oder ein Fenster des medizinischen Geräts, insbesondere eine Linse oder ein Fenster für ein Endoskop.

Weitere Eigenschaften und Merkmale ergeben sich aus der nachfolgenden Beschreibung beispielhafter Ausführungsformen und Versuchsergebnisse, die nicht in einem einschränkenden Sinn verstanden werden sollen, sowie aus den Zeichnungen. In diesen zeigen:
- Fig. 1 eine schematische Darstellung eines erfindungsgemäßen optischen Elements,
- Fig. 2 ein Diagramm zum Verhalten des Reflexionsgrads eines optischen Elements gemäß eines Vergleichsbeispiels über mehrere Ablaugzyklen hinweg, und
- Fig. 3 ein Diagramm zum Verhalten des Reflexionsgrads eines erfindungsgemäßen optischen Elements über mehrere Ablaugzyklen hinweg.

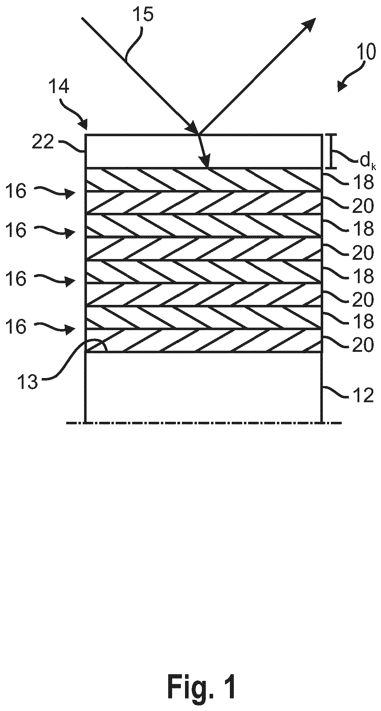

In Fig. 1 ist schematisch ein erfindungsgemäßes optisches Element 10 dargestellt.

Das optische Element 10 umfasst ein Substrat 12 und eine auf einer Auftragsfläche 13 des Substrats 12 aufgebrachte Antireflexionsbeschichtung 14.

Das Substrat 12 ist aus einem optisch transparenten Material, das heißt, aus einem Material, das wenigstens teilweise transparent für elektromagnetische Strahlung 15 ist, insbesondere für elektromagnetische Strahlung mit einer Wellenlänge im Bereich von 400 nm bis 750 nm.

Beispielsweise ist das optisch transparente Material des Substrats 12 aus Saphir, Glas oder Quarz.

Es versteht sich, dass je nach angedachter Anwendung des optischen Elements 10 der Bereich der Wellenlänge der elektromagnetischen Strahlung auch abweichend ausgestaltet sein kann.

Die Antireflexionsbeschichtung 14 verfügt über eine alternierende Schichtabfolge aus Lagen 16, die jeweils über eine erste Teilschicht 18 und eine zweite Teilschicht 20 verfügen.

Der Brechungsindex der ersten Teilschichten 18 ist jeweils niedriger als der Brechungsindex der zweiten Teilschichten 20 der jeweiligen Lage 16.

Beispielsweise liegt der Brechungsindex der ersten Teilschichten 18 im Bereich von 1,4 bis 1,6 und der Brechungsindex der zweiten Teilschichten 20 im Bereich von 1,9 bis 2,4. Somit können die ersten Teilschichten 18 auch als "niedrigbrechende Teilschichten" und die zweiten Teilschichten 20 auch als "hochbrechende Teilschichten" bezeichnet werden.

Beispielsweise besteht die erste Teilschicht 18 aus Siliziumoxid (SiO₂, Brechungsindex im Bereich von 1,46 bis 1,48) und die zweite Teilschicht 20 aus Ta₂O₅ (Brechungsindex im Bereich von 2,10 bis 2,20).

In der gezeigten Ausführungsform verfügt die Antireflexionsbeschichtung 14 über insgesamt vier Lagen 16. Selbstverständlich kann die Antireflexionsbeschichtung 14 auch über weniger oder mehr Lagen 16 verfügen, solange der jeweils erforderliche Transmissionsgrad bzw. Reflexionsgrad mit der entsprechenden Anzahl an Lagen 16 erzielt werden kann.

Ebenso weisen in der schematischen Darstellung in Fig. 1 alle Teilschichten 18 und 20 und somit alle Lagen 16 die gleiche Dicke auf. Jedoch können sich die Dicken der Teilschichten 18 und 20 sowie der Lagen 16 auch voneinander unterscheiden.

Auf der Schichtabfolge aus Lagen 16 ist erfindungsgemäß zusätzlich eine Korrosionsschutzschicht 22 aufgebracht, nämlich direkt auf der ersten Teilschicht 18 der obersten der Lagen 16 der alternierenden Schichtabfolge, also auf derjenigen Teilschicht 18, die am weitesten vom Substrat 12 entfernt liegt.

Die Korrosionsschutzschicht 22 dient dazu, die alternierende Schichtabfolge vor Beschädigungen zu schützen, insbesondere vor Beschädigungen aufgrund der Einwirkung von aggressiven Chemikalien wie alkalischen Lösungen.

In der gezeigten Ausführungsform ist die Korrosionsschutzschicht 22 aus einem hochbrechenden Material, das Zirconiumoxid (ZrO₂) ist. Dieses Material weist eine hohe chemische Beständigkeit gegenüber aggressiven Chemikalien auf und bieten zugleich einen Schutz vor mechanischen Beschädigungen.

Die Korrosionsschutzschicht 22 weist eine Schichtdicke dₖ im Bereich von 3,0 bis 6,0 nm auf.

Der hohe Brechungsindex des hochbrechenden Materials der Korrosionsschutzschicht 22 kann jedoch zu einer ungewünschten Verringerung des Transmissionsgrads bzw. einer ungewünschten Erhöhung des Reflexionsgrads des optischen Elements 10 führen. Um diesen Effekt auszugleichen und zugleich die Widerstandsfähigkeit der Korrosionsschutzschicht 22 und somit der Antireflexionsbeschichtung 14 aufrecht zu erhalten, ist erfindungsgemäß vorgesehen, dass das Verhältnis α aus dem Brechungsindex nₖ der Korrosionsschutzschicht 22 und der Schichtdicke dₖ der Korrosionsschutzschicht 22 in Nanometern im Bereich von 0,3 bis 0,9 liegt.

Es hat sich überraschend gezeigt, dass auf diese Weise abnutzungsbeständige Materialien in der Korrosionsschutzschicht 22 eingesetzt werden können, die an sich einen vergleichsweise hohen Brechungsindex aufweisen, während weiterhin der Transmissionsgrad bzw. Reflexionsgrad höchstens unwesentlich beeinträchtigt wird.

Dieser Effekt wird dadurch verstärkt, dass die Korrosionsschutzschicht 22 mittels Sputtern auf die oberste der ersten Teilschichten 18 aufgetragen ist, wodurch eine hohe Packungsdichte der Korrosionsschutzschicht 22 und eine geringe Oberflächenrauheit erreicht ist.

### Versuche zur Chemikalienbeständigkeit

Im Folgenden wird der Effekt der erfindungsgemäß vorgesehenen Korrosionsschutzschicht 22 anhand von Versuchsergebnissen weiter verdeutlicht.

### Beispiel 1 (Vergleichsbeispiel)

Auf ein Saphirsubstrat wurde, auf eine Auftragsfläche des Saphirsubstrats, eine Antireflexionsbeschichtung aufgebracht, die aus einer Schichtabfolge aus vier Lagen aufgebaut war, wobei jede Lage aus einer niedrigbrechenden Teilschicht und einer hochbrechenden Teilschicht zusammengesetzt war. Die äußerste der Teilschichten der Antireflexionsbeschichtung, das heißt diejenige Teilschicht, die am weitesten vom Saphirsubstrat entfernt lag, war eine niedrigbrechende Teilschicht.

Die jeweiligen Teilschichten wurden mittels Sputtern aufgebracht.

Der Schichtaufbau der Antireflexionsbeschichtung war ausgehend vom Saphirsubstrat wie folgt: Nb₂O₅ (d = 14 nm), SiO₂ (d = 37 nm), Nb₂O₅ (d = 25 nm), SiO₂ (d = 50 nm), Nb₂O₅ (d = 11 nm), SiO₂ (d = 335 nm), Nb₂O₅ (d = 10,4 nm), SiO₂ (d = 31,6 nm), Nb₂O₅ (d = 140 nm), SiO₂ (d = 79 nm).

### Beispiel 2 (erfindungsgemäßes Beispiel)

Analog zum Vergleichsbeispiel wurde ein Saphirsubstrat, auf einer Auftragsfläche des Saphirsubstrats, mit einer Antireflexionsbeschichtung wie zuvor für Beispiel 1 beschrieben versehen, wobei die äußerste Teilschicht aus SiO₂ statt 79 nm lediglich eine Dicke von 70 nm aufwies.

Zusätzlich wurde auf die oberste der Lagen der Antireflexionsbeschichtung, nämlich auf die oberste Teilschicht der obersten Lage, die eine niedrigbrechende Teilschicht war, eine Korrosionsschutzschicht mittels Sputtern aufgebracht, wobei die Korrosionsschutzschicht aus ZrO₂ bestand.

Die Korrosionsschutzschicht wies eine Dicke von 5,0 nm und einen Brechungsindex von 2,05 auf.

### Beständigkeitstest

Das Verhalten der gemäß den Beispielen 1 und 2 hergestellten optischen Elemente unter Bedingungen, wie sie bei Reinigungszyklen in der medizinischen Anwendung zu erwarten sind, wurde wie folgt mittels Ablaugzyklen simuliert.

Zunächst wurde der Reflexionsgrad R in einem Wellenlängenbereich von 350 bis 800 nm des optischen Elements wie hergestellt mittels eines Spektralphotometers bestimmt.

Es wurde ein Ultraschallbad bereitgestellt, das ein Ultraschallbecken mit einem Fassungsvermögen von 10 L aufwies. Das Ultraschallbecken wurde etwa zur Hälfte mit einer Kaliumhydroxidlösung befüllt, die eine Konzentration von 10 Gewichtsprozent Kaliumhydroxid (KOH) aufwies, und die Kaliumhydroxidlösung wurde auf eine Temperatur von 60 °C erwärmt.

Anschließend wurde das jeweils zu testende optische Element mit mehreren Ablaugzyklen behandelt und nach jedem Ablaugzyklus erneut der Reflexionsgrad R des optischen Elements in einem Wellenlängenbereich von 350 bis 800 nm mittels eines Spektralphotometers bestimmt.

Ein Ablaugzyklus umfasste dabei folgende Schritte:
a) Anbringen des zu testenden optischen Elements in einem Halter des Ultraschallbeckens, sodass das optische Element vollständig von Kaliumhydroxidlösung bedeckt ist,
b) Beschallen des optischen Elements für eine Stunde bei 60 °C mit einer HF-Leistung von 300 W,
c) Entfernen des optischen Elements aus dem Ultraschallbecken, Abspülen mit frischem Wasser und manuelles Reinigen der Oberfläche.

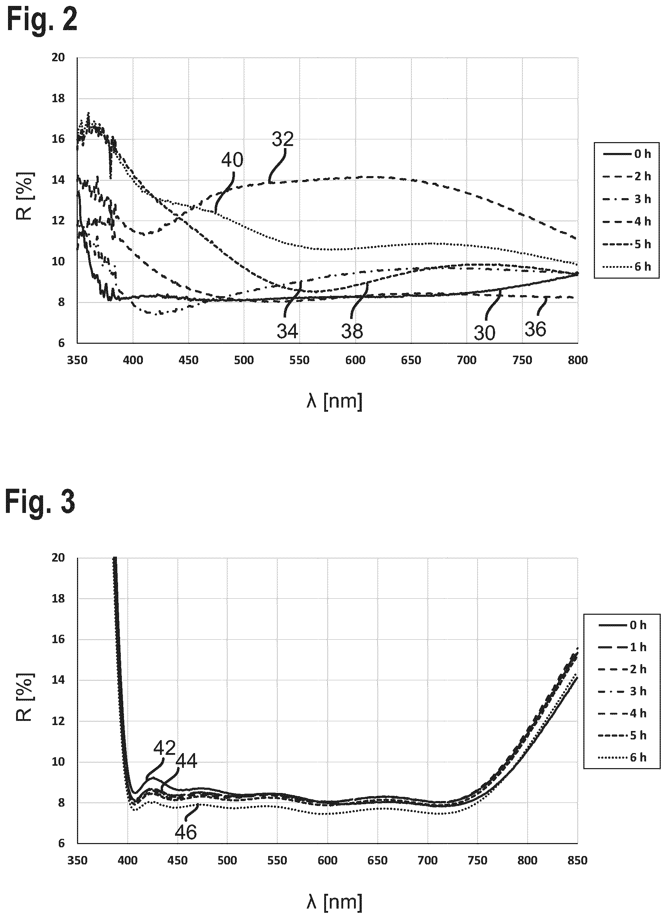

Fig. 2 zeigt die gemessenen Reflektionsgrade R für das nicht erfindungsgemäße Beispiel 1.

Zu Beginn wies das optische Element einen Reflektionsgrad im Bereich von 400 bis 750 nm von etwa 8% auf (Kurve 30). Der bereits zu Beginn vergleichsweise hohe Reflektionsgrad ist darauf zurückzuführen, dass als Substrat ein lediglich einseitig entspiegeltes Saphirsubstrat verwendet wurde.

Es ist zu erkennen, dass der Reflexionsgrad nach zwei Ablaugzyklen (Kurve 32) zunächst zunimmt, bevor er nach drei und vier Ablaugzyklen absinkt (Kurve 34 bzw. 36) und anschließend nach fünf und sechs Ablaugzyklen (Kurve 38 bzw. 40) wieder ansteigt.

In Fig. 2 sind die Kurven auch mit einer Bezeichnung von "x h" versehen, wobei "x" die Anzahl an Stunden angibt, die das optische Element während der bereits erfolgten Ablaugzyklen im Ultraschallbad verbracht hat. Entsprechend bezeichnet "0 h" die Messergebnisse des optischen Elements vor dem ersten Ablaugzyklus, "2 h" die Messergebnisse des optischen Elements nach zwei Ablaugzyklen usw.

Dieses Verhalten ist darauf zurückzuführen, dass die Teilschichten der Lagen des optischen Elements, die unterschiedliche Brechungsindizes aufweisen, abgetragen werden. So steigt der Reflexionsgrad an, sobald eine oberste Teilschicht, die niedrigbrechend ist, abgetragen wird und eine darunter angeordnete Teilschicht, die einen höheren Brechungsindex aufweist als die niedrigbrechende Teilschicht, freigelegt wird. Sobald diese wiederum abgetragen wird und eine weitere Teilschicht freilegt, die wiederum eine niedrigbrechende Teilschicht ist, sinkt der Reflexionsgrad erneut usw.

Aus Fig. 2 ist jedoch auch ersichtlich, dass der mittlere Reflexionsgrad durch den Abbau der Teilschichten des optischen Elements im Vergleich zum Ursprungszustand höher ist und sich somit die optischen Eigenschaften des optischen Elements verschlechtern.

Fig. 3 zeigt hingegen das Verhalten des erfindungsgemäßen optischen Elements gemäß Beispiel 2.

In diesem Fall ist zu erkennen, dass sich der mittlere Reflektionsgrad im Vergleich zum Ausgangszustand (Kurve 42) nach einem bis sechs Ablaugzyklen (Kurven 44 bzw. 46) reduziert hat. Dieser Effekt ist darauf zurückzuführen, dass etwaige Verunreinigungen auf der Oberfläche der Korrosionsschutzschicht in den ersten Ablaugzyklen entfernt werden und die Korrosionsschutzschicht ggf. in geringem Umfang abgebaut wird.

Aus den Messergebnissen geht jedoch hervor, dass das im Vergleichsbeispiel 1 beobachtete Verhalten nicht auftritt, sondern auch nach mehreren Ablaugzyklen die optischen Eigenschaften des optischen Elements erhalten bleiben.

## Patentansprüche

1. Medizinisches Gerät umfassend ein optisches Element (10) mit einem Substrat (12) und einer auf eine Auftragsfläche (13) des Substrats (12) aufgebrachten Antireflexionsbeschichtung (14),
wobei die Antireflexionsbeschichtung (14) eine alternierende Schichtabfolge aus Teilschichten (18, 20) mit unterschiedlichen Brechungsindizes umfasst,
wobei die Antireflexionsbeschichtung (14) zusätzlich zur alternierenden Schichtabfolge eine Korrosionsschutzschicht (22) zum Schützen der Antireflexionsbeschichtung (14) vor alkalischen Lösungen umfasst, die diejenige Schicht der Antireflexionsbeschichtung (14) ist, die am weitesten von der Auftragsfläche (13) des Substrats (12) entfernt ist,
wobei die Korrosionsschutzschicht (22) so ausgelegt ist, dass das Verhältnis aus dem Brechungsindex der Korrosionsschutzschicht (22) und der Schichtdicke der Korrosionsschutzschicht (22) in Nanometern im Bereich von 0,3 bis 0,9 liegt, und
wobei die Korrosionsschutzschicht (22) aus einem hochbrechenden Material besteht, das Zirconiumoxid ist.

2. Medizinisches Gerät nach Anspruch 1, wobei die Korrosionsschutzschicht (22) einen Brechungsindex im Bereich von 1,8 bis 2,5 aufweist, bevorzugt im Bereich von 1,9 bis 2,2.

3. Medizinisches Gerät nach einem der Ansprüche 1 oder 2, wobei die Korrosionsschutzschicht (22) eine Schichtdicke im Bereich von 3,0 bis 6,0 nm hat, bevorzugt von 3,0 bis 5,0 nm.

4. Medizinisches Gerät nach einem Ansprüche 1 bis 3, wobei die Korrosionsschutzschicht (22) mittels Sputtern auftragen ist, insbesondere mittels DC-Sputtern, HF-Sputtern, Magnetronsputtern oder Ionenstrahlsputtern.

5. Medizinisches Gerät nach Anspruch 4, wobei die Korrosionsschutzschicht (22) eine Oberflächenrauheit Rₐ von 0,50 nm oder weniger aufweist.

6. Medizinisches Gerät nach einem der vorhergehenden Ansprüche, wobei das optische Element (10) nach sechs Ablaugzyklen eine Zunahme des Reflexionsgrads von 1 % oder weniger aufweist, wobei ein Ablaugzyklus die Behandlung des optischen Elements (10) in einem Ultraschallbad mit einer Leistung von 300 W bei einer Temperatur von 60 °C für eine Stunde umfasst, wobei das Ultraschallbad eine wässrige Kaliumhydroxidlösung mit einer Konzentration von 10 Gewichtsprozent Kaliumhydroxid, bezogen auf das Gesamtgewicht der Kaliumhydroxidlösung, aufweist.

7. Medizinisches Gerät nach einem der vorhergehenden Ansprüche, wobei die alternierende Schichtabfolge eine oder mehrere Lagen (16) umfasst, wobei jede Lage (16) über eine erste Teilschicht (18) und eine zweite Teilschicht (20) verfügt und der Brechungsindex der ersten Teilschicht (18) niedriger ist als der Brechungsindex der zweiten Teilschicht (20).

8. Medizinisches Gerät nach Anspruch 7, wobei die Korrosionsschutzschicht (22) direkt auf eine erste Teilschicht (18) der alternierenden Schichtabfolge aufgebracht ist.

9. Medizinisches Gerät nach Anspruch 7 oder 8, wobei die alternierende Schichtabfolge mindestens vier Lagen (16) umfasst.

10. Medizinisches Gerät nach einem der vorhergehenden Ansprüche, wobei das medizinische Gerät ein Endoskop ist.

11. Medizinisches Gerät nach Anspruch 10, wobei das optische Element (10) eine Linse oder ein Fenster des medizinischen Geräts ist, insbesondere eine Linse oder ein Fenster für ein Endoskop.

12. Verwendung eines optischen Elements (10) mit einem Substrat (12) und einer auf eine Auftragsfläche (13) des Substrats (12) aufgebrachten Antireflexionsbeschichtung (14) in einem medizinischen Gerät,
wobei die Antireflexionsbeschichtung (14) eine alternierende Schichtabfolge aus Teilschichten (18, 20) mit unterschiedlichen Brechungsindizes umfasst,
wobei die Antireflexionsbeschichtung (14) zusätzlich zur alternierenden Schichtabfolge eine Korrosionsschutzschicht (22) zum Schützen der Antireflexionsbeschichtung (14) vor alkalischen Lösungen umfasst, die diejenige Schicht der Antireflexionsbeschichtung (14) ist, die am weitesten von der Auftragsfläche (13) des Substrats (12) entfernt ist,
wobei die Korrosionsschutzschicht (22) so ausgelegt ist, dass das Verhältnis aus dem Brechungsindex der Korrosionsschutzschicht (22) und der Schichtdicke der Korrosionsschutzschicht (22) in Nanometern im Bereich von 0,3 bis 0,9 liegt, und
wobei die Korrosionsschutzschicht (22) aus einem hochbrechenden Material besteht, das Zirconiumoxid ist.

13. Verwendung nach Anspruch 12, wobei das optische Element (10) nach sechs Ablaugzyklen eine Zunahme des Reflexionsgrads von 1 % oder weniger aufweist, wobei ein Ablaugzyklus die Behandlung des optischen Elements (10) in einem Ultraschallbad mit einer Leistung von 300 W bei einer Temperatur von 60 °C für eine Stunde umfasst, wobei das Ultraschallbad eine wässrige Kaliumhydroxidlösung mit einer Konzentration von 10 Gewichtsprozent Kaliumhydroxid, bezogen auf das Gesamtgewicht der Kaliumhydroxidlösung, aufweist.

## Claims

1. A medical device comprising an optical element (10) having a substrate (12) and an anti-reflective coating (14) applied to an application surface (13) of the substrate (12),
wherein the anti-reflective coating (14) comprises an alternating layer sequence of sublayers (18, 20) having different refractive indices,
wherein, in addition to the alternating layer sequence, the anti-reflective coating (14) comprises an anti-corrosion layer (22) to protect the anti-reflective coating (14) from alkaline solutions, which is the layer of the anti-reflective coating (14) that is farthest away from the application surface (13) of the substrate (12),
wherein the anti-corrosion layer (22) is designed such that the ratio of the refractive index of the anti-corrosion layer (22) to the layer thickness of the anti-corrosion layer (22) in nanometers is in the range of from 0.3 to 0.9, and
wherein the anti-corrosion layer (22) consists of a highly refractive material which is zirconium oxide.

2. The medical device according to claim 1, wherein the anti-corrosion layer (22) has a refractive index in the range of from 1.8 to 2.5, preferably in the range of from 1.9 to 2.2.

3. The medical device according to either of claims 1 or 2, wherein the anti-corrosion layer (22) has a layer thickness in the range of from 3.0 to 6.0 nm, preferably from 3.0 to 5.0 nm.

4. The medical device according to any one of claims 1 to 3, wherein the anti-corrosion layer (22) is applied by means of sputtering, in particular by means of DC sputtering, RF sputtering, magnetron sputtering or ion beam sputtering.

5. The medical device according to claim 4, wherein the anti-corrosion layer (22) has a surface roughness Rₐ of 0.50 nm or less.

6. The medical device according to any one of the preceding claims, wherein after six leaching cycles, the optical element (10) exhibits an increase in reflectance of 1 % or less, wherein one leaching cycle includes treatment of the optical element (10) in an ultrasonic bath having a power of 300 W at a temperature of 60 °C for one hour, wherein the ultrasonic bath includes an aqueous potassium hydroxide solution having a concentration of 10 percent by weight of potassium hydroxide, based on the total weight of the potassium hydroxide solution.

7. The medical device according to any one of the preceding claims, wherein the alternating layer sequence comprises one or more coats (16), each coat (16) having a first sublayer (18) and a second sublayer (20), and the refractive index of the first sublayer (18) being lower than the refractive index of the second sublayer (20).

8. The medical device according to claim 7, wherein the anti-corrosion layer (22) is applied directly to a first sublayer (18) of the alternating layer sequence.

9. The medical device according to claim 7 or 8, wherein the alternating layer sequence comprises at least four coats (16).

10. The medical device according to any one of the preceding claims, wherein the medical device is an endoscope.

11. The medical device according to claim 10, wherein the optical element (10) is a lens or a window of the medical device, in particular a lens or a window for an endoscope.

12. Use of an optical element (10) having a substrate (12) and an anti-reflective coating (14) applied to an application surface (13) of the substrate (12) in a medical device,
wherein the anti-reflective coating (14) comprises an alternating layer sequence of sublayers (18, 20) having different refractive indices,
wherein, in addition to the alternating layer sequence, the anti-reflective coating (14) comprises an anti-corrosion layer (22) to protect the anti-reflective coating (14) from alkaline solutions, which is the layer of the anti-reflective coating (14) that is farthest away from the application surface (13) of the substrate (12),
wherein the anti-corrosion layer (22) is designed such that the ratio of the refractive index of the anti-corrosion layer (22) to the layer thickness of the anti-corrosion layer (22) in nanometers is in the range of from 0.3 to 0.9, and
wherein the anti-corrosion layer (22) consists of a highly refractive material which is zirconium oxide.

13. The use according to claim 12, wherein after six leaching cycles, the optical element (10) exhibits an increase in reflectance of 1 % or less, wherein one leaching cycle includes treatment of the optical element (10) in an ultrasonic bath having a power of 300 W at a temperature of 60 °C for one hour, wherein the ultrasonic bath includes an aqueous potassium hydroxide solution having a concentration of 10 percent by weight of potassium hydroxide, based on the total weight of the potassium hydroxide solution.

## Revendications

1. Dispositif médical comprenant un élément optique (10) présentant un substrat (12) et un revêtement antireflet (14) déposé sur une surface d'application (13) du substrat (12),
le revêtement antireflet (14) comprenant une succession de couches alternée de sous-couches (18, 20) présentant des indices de réfraction différents,
le revêtement antireflet (14) comprenant, en plus de la succession de couches alternée, une couche anticorrosion (22) pour la protection du revêtement antireflet (14) contre les solutions alcalines, qui est la couche du revêtement antireflet (14) la plus éloignée de la surface d'application (13) du substrat (12),
la couche anticorrosion (22) étant réalisée de telle sorte que le rapport entre l'indice de réfraction de la couche anticorrosion (22) et l'épaisseur de couche de la couche anticorrosion (22) en nanomètres se situe dans la plage de 0,3 à 0,9, et
la couche anticorrosion (22) étant composée d'un matériau fortement réfringent, qui est de l'oxyde de zirconium.

2. Dispositif médical selon la revendication 1, la couche anticorrosion (22) présentant un indice de réfraction dans la plage de 1,8 à 2,5, de préférence dans la plage de 1,9 à 2,2.

3. Dispositif médical selon l'une des revendications 1 ou 2, la couche anticorrosion (22) présentant une épaisseur de couche dans la plage de 3,0 à 6,0 nm, de préférence de 3,0 à 5,0 nm.

4. Dispositif médical selon l'une des revendications 1 à 3, la couche anticorrosion (22) étant déposée par pulvérisation cathodique, en particulier par pulvérisation cathodique en courant continu, par pulvérisation cathodique à haute fréquence, par pulvérisation cathodique magnétron ou par pulvérisation cathodique par faisceau d'ions.

5. Dispositif médical selon la revendication 4, la couche anticorrosion (22) présentant une rugosité de surface Rₐ de 0,50 nm ou moins.

6. Dispositif médical selon l'une des revendications précédentes, l'élément optique (10) présentant, après six cycles de lessivage, une augmentation du facteur de réflexion inférieure ou égale à 1 %, un cycle de lessivage comprenant le traitement de l'élément optique (10) dans un bain à ultrasons d'une puissance de 300 W à une température de 60 °C pendant une heure, le bain à ultrasons contenant une solution aqueuse d'hydroxyde de potassium à une concentration de 10 % en poids d'hydroxyde de potassium, par rapport au poids total de la solution d'hydroxyde de potassium.

7. Dispositif médical selon l'une des revendications précédentes, la succession de couches alternée comprenant une ou plusieurs strates (16), chaque strate (16) comportant une première sous-couche (18) et une deuxième sous-couche (20), et l'indice de réfraction de la première sous-couche (18) étant inférieur à l'indice de réfraction de la deuxième sous-couche (20).

8. Dispositif médical selon la revendication 7, la couche anticorrosion (22) étant appliquée directement sur une première sous-couche (18) de la succession de couches alternée.

9. Dispositif médical selon la revendication 7 ou 8, la succession de couches alternée comprenant au moins quatre strates (16).

10. Dispositif médical selon l'une des revendications précédentes, le dispositif médical étant un endoscope.

11. Dispositif médical selon la revendication 10, l'élément optique (10) étant une lentille ou une fenêtre du dispositif médical, en particulier une lentille ou une fenêtre pour un endoscope.

12. Utilisation d'un élément optique (10) comportant un substrat (12) et un revêtement antireflet (14) déposé sur une surface d'application (13) du substrat (12) dans un dispositif médical,
le revêtement antireflet (14) comprenant une succession de couches alternée de sous-couches (18, 20) présentant des indices de réfraction différents,
le revêtement antireflet (14) comprenant, en plus de la succession de couches alternée, une couche anticorrosion (22) pour la protection du revêtement antireflet (14) contre les solutions alcalines, qui est la couche du revêtement antireflet (14) la plus éloignée de la surface d'application (13) du substrat (12),
la couche anticorrosion (22) étant réalisée de telle sorte que le rapport entre l'indice de réfraction de la couche anticorrosion (22) et l'épaisseur de couche de la couche anticorrosion (22) en nanomètres se situe dans la plage de 0,3 à 0,9, et
la couche anticorrosion (22) étant composée d'un matériau fortement réfringent, qui est de l'oxyde de zirconium.

13. Utilisation selon la revendication 12, l'élément optique (10) présentant, après six cycles de lessivage, une augmentation du facteur de réflexion inférieure ou égale à 1 %, un cycle de lessivage comprenant le traitement de l'élément optique (10) dans un bain à ultrasons d'une puissance de 300 W à une température de 60 °C pendant une heure, le bain à ultrasons contenant une solution aqueuse d'hydroxyde de potassium à une concentration de 10 % en poids d'hydroxyde de potassium, par rapport au poids total de la solution d'hydroxyde de potassium.
